# EUROPEAN PATENT SPECIFICATION

(11) **EP 3 240 992 B1**
(45) Date of publication and mention of the grant of the patent: **06.04.2022**
(21) Application number: 15837101.3
(22) Date of filing: 30.12.2015
(51) Int. Cl.: G01B 11/245

(54) **APPARATUS FOR TESTING CONFORMANCE OF ROTOR DISCS OF GAS TURBINES**
VORRICHTUNG ZUM TESTEN DER ÜBEREINSTIMMUNG VON ROTORSCHEIBEN VON GASTURBINEN
APPAREIL DE TEST DE CONFORMITÉ DES DISQUES DE ROTOR DE TURBINES À GAZ

(30) Priority: 30.12.2014 IT MI20142289
(43) Date of publication of application: 08.11.2017
(73) Proprietor: Ansaldo Energia S.p.A., 16152 Genova (IT)
(72) Inventor: PIGNONE, Enrico, 16010 Rossiglione (IT)
(74) Representative: Bernotti, Andrea
(86) International application number: PCT/IB2015/060056
(87) International publication number: WO 2016/108200

(56) References cited:
- US-A- 4 750 141
- US-A- 4 931 962
- US-A- 4 959 553
- US-A- 5 745 237
- US-A1- 2012 236 289

## Description

### TECHNICAL FIELD

The present invention relates to an apparatus for testing the conformance of rotor discs of gas turbines.

### BACKGROUND ART

As is known, a gas turbine rotor of an industrial electric power plant normally comprises a plurality of bladed discs and one or more spacer elements, which are aligned along an axis and connected face-to-face. The frontal coupling between adjacent discs is achieved through Hirth couplings. Each disc is therefore equipped with two respective crowns of radial teeth, known as Hirth toothing, with one on each face. The crowns couple to crowns of adjacent discs to form the Hirth couplings. The discs and the spacer elements are clamped in a pack by a central tension rod. The discs are provided with respective arrays of blades and each defines a compressor or turbine rotor stage.

The rotors of gas turbines must be manufactured and assembled with great precision to ensure almost perfect balancing. Given the masses and high speeds of rotation (normally 3000 rpm or 3600 rpm, depending on the standards of the various countries), even minimal defects cause dangerous vibrations and, as a rule, result in premature aging of some components.

Checking the conformance of the discs to acceptance criteria is therefore a fundamental step in the manufacture of a gas turbine.

However, at present, the available instruments and methods require considerable time and do not guarantee uniform precision, as manual operations and subjective evaluation by the operators are required. Testing accuracy cannot therefore be considered satisfactory.

A first technique contemplates applying a layer of a colorant on the Hirth toothing and evaluating the transfer of colorant by contact with a template. The colorant is normally applied by the operator using a paintbrush. It is evident that, however expert and skilled the operator is, the amount and thickness of the colorant applied can only be controlled in a very approximate and scarcely repeatable manner and, in any case, there are substantial differences from one operator to another. Secondly, there are inevitable gaps and margins of interpretation in the specifications that define the procedure for evaluating the effective contact surface between the Hirth toothing and the template.

The dimensional checking of certain details, such as the width of the flat portions of the teeth, is normally carried out by visual inspection, even if with the aid of systems with graduated lenses. The use of auxiliary instruments still entails manual operations, for example in positioning, and there are still the operator's margins of discretion.

At present, testing results are consequently neither very accurate nor satisfactory and the efficiency of the machine production line may be affected, even quite significantly, by undetected imperfections in the shape of the discs and their frontal coupling. In fact, the incorrect coupling between adjacent discs can cause elevated imbalance in the rotor, which would however only be identified at the end of the rotor assembly operations. Coupling errors are not easily predictable and can be detected during the balance tests that are generally carried out in factory inspection tests before the rotor is sent to the installation centre. Adopting corrective actions to rectify imbalances detected in the phase of testing the finished rotor is, however, particularly costly for the manufacturer. In fact, in the majority of cases, the rotor must be disassembled and the discs must be checked again to identify the non-conformant elements, which must then be re-machined, if possible, or replaced.

US 4 750 141 A discloses a bow and warp station comprising a turntable, rotatable about an axis and configured to support a disc in a measuring plane; an actuator, operable to rotate the turntable about the axis; and a supporting structure, supporting a first distance meter and a second distance meter on opposite sides with respect to the measuring plane. Another example of a measurement station is disclosed in US 5 745 237 A.

### DISCLOSURE OF INVENTION

The object of the present invention is therefore to provide an apparatus for testing the conformance of rotor discs of gas turbines that enables avoiding or at least mitigating the described drawbacks.

According to the present invention, an apparatus is provided for testing the conformance of rotor discs of gas turbines as defined in claim 1.

### BRIEF DESCRIPTION OF THE DRAWINGS

The present invention will now be described with reference to the accompanying drawings, which illustrate a non-limitative embodiment, in which:
- Figure 1 is a plan view, from above, of a rotor of a gas turbine, in cross-section along a horizontal axial plane;
- Figure 2 shows a lateral view, partially in section, of an apparatus for testing the conformance of rotor discs of gas turbines according to one embodiment of the present invention;

- Figure 3 is a simplified block diagram of a part of the apparatus in Figure 2;
- Figure 4 is a graph showing a first rotor disc profile detectable by means of the apparatus in Figure 2;
- Figure 5 is a graph showing a second rotor disc profile detectable by means of the apparatus in Figure 2;
- Figure 6 is a graph showing a third rotor disc profile

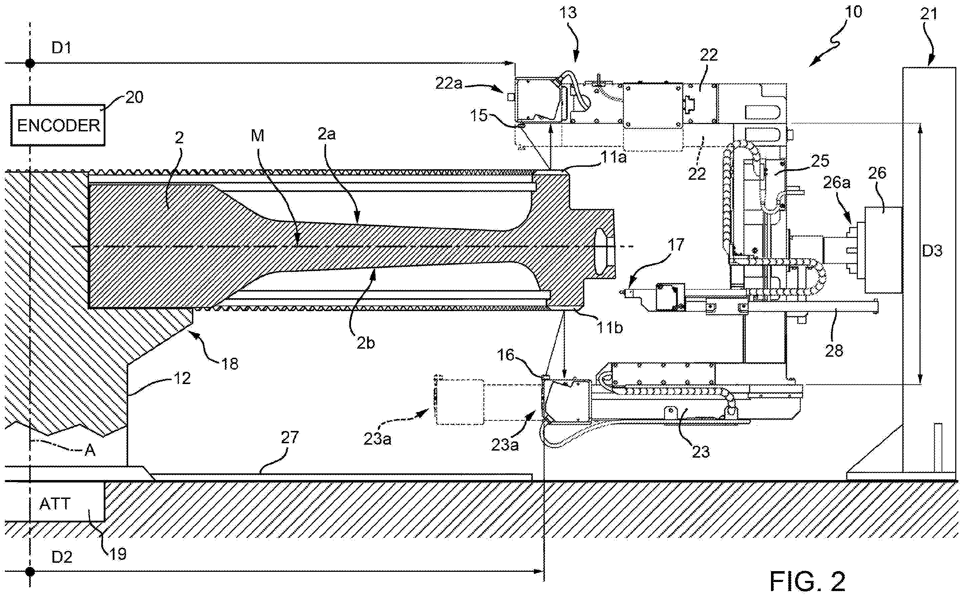

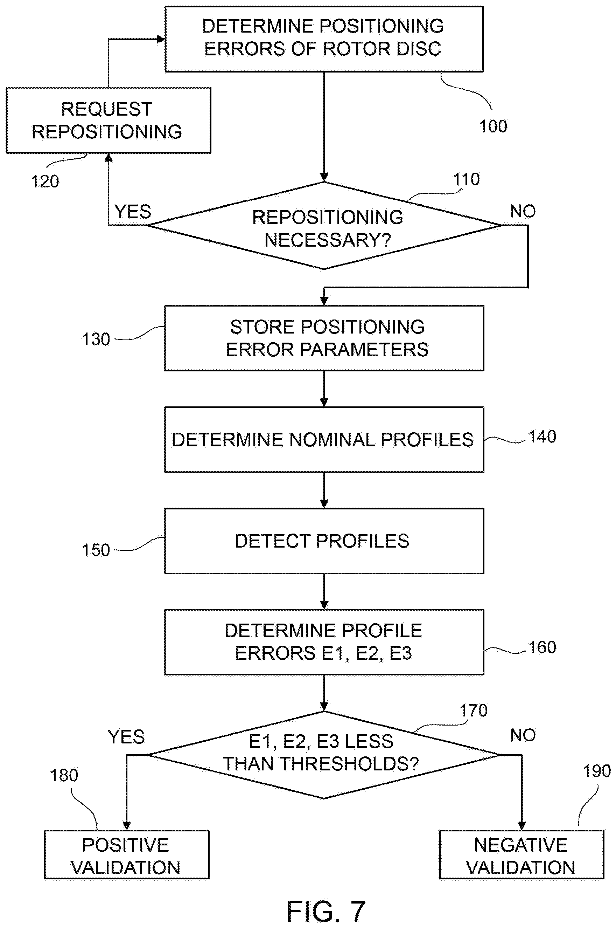

detectable by means of the apparatus in Figure 2; and - Figure 7 is a flow chart regarding a validation procedure carried out by means of the apparatus in Figure 2.

### BEST MODE FOR CARRYING OUT THE INVENTION

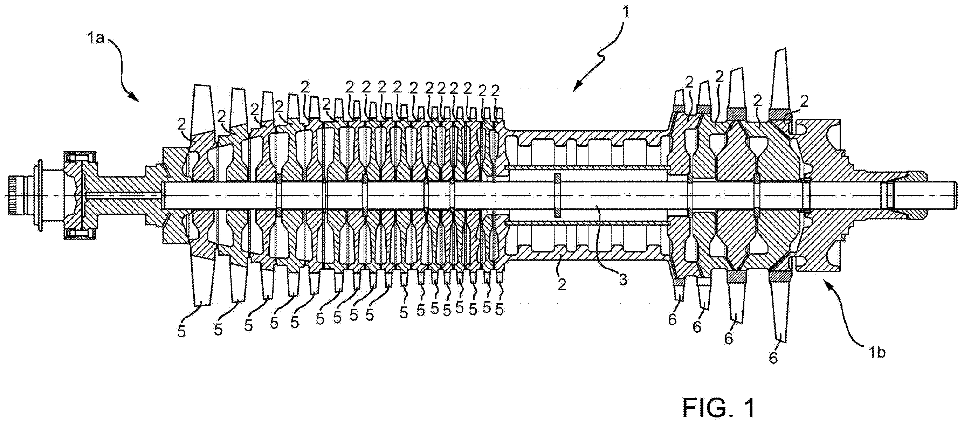

With reference to Figure 1, a rotor of a gas turbine of an electric power plant is indicated, as a whole, by reference numeral 1 and comprises a plurality of discs 2 aligned along an axis A and clamped in a pack by a central tension rod 3. A first group of discs 2, provided with respective first rotor blades 5, defines a compressor section of the rotor 1, while a second group of discs 2, provided with respective second rotor blades 6, defines a turbine section 1b of the rotor 1. The compressor section and the turbine section 1b are separated from each other by a bladeless disc 2, basically with the function of a spacer and shaped substantially like a cylinder. In use, an annular combustion chamber (not shown) of the gas turbine can be arranged about the spacer disc 2.

Figure 2 shows an apparatus 10 for testing the conformance of rotor discs of gas turbines in accordance with one embodiment of the present invention. In Figure 2, a rotor disc 2 is also shown, without the respective blades and supported by the apparatus 10 in a horizontal measuring plane M. In particular, the disc 2 has a first Hirth toothing 11a on a first face 2a, for example on the compressor side, and a second Hirth toothing 11b on a second face 2b, for example on the turbine side (here, the Hirth toothings 11a and 11b are only partially visible and shown in a simplified manner).

The apparatus 10 comprises a turntable 12 and a supporting structure 13 on which a first distance meter 15, a second distance meter 16 and a radial runout sensor 17 are installed.

The turntable 12 is rotatable about an axis A and has a self-centring support portion 18, which supports the rotor disc 2 in the measuring plane M in a coaxial manner (for example, a median plane of the rotor disc 2 perpendicular to its axis coincides with the measuring plane M; furthermore, the axis of the rotor disc 2 is aligned with the rotation axis A of the turntable 2). The turntable 12 is equipped with an actuator 19 that enables setting the turntable 12 and the supported rotor disc 2 in rotation with a controlled angular speed. An angular position sensor 20, for example an encoder, enables detecting an angular position of the turntable 12 with respect to a reference, not shown.

The supporting structure 13 is mounted on a frame 21 and comprises a first arm 22 and a second arm 23 connected by a transverse arm 25 so as to form a fork. A central portion of the transverse arm 25 is provided with a coupling for connection to a chuck 26a carried by a movable beam 26 of the frame 21.

The first arm 22 and the second arm 23 are arranged on opposite sides of the measuring plane M and are parallel to the latter. Furthermore, the first arm 22 and the second arm 23 are oriented radially with respect to the axis A of the turntable 12 and are therefore parallel to each other.

The supporting structure 13 is relatively movable with respect to the turntable 12 in a radial direction with respect to axis A. The relative movement may be obtained both by extending or retracting the movable beam 26 of the frame 21 in a radial direction, and by moving the turntable 12 along guides 27. In one embodiment, which is not shown, the movable beam 26 can also translate vertically, to adjust the distance of the first arm 22 and the second arm 23 from the measuring plane M.

Furthermore, in one embodiment, the chuck 26a enables rotation of the supporting structure 13 about a chuck axis B. In particular, a rotation of 180° is allowed, so that the first arm 22 and the second arm 23 have their positions exchanged with respect to that shown in Figure 2.

In addition, the first arm 22 and the second arm 23 are relatively movable with respect to each other. More precisely, in one embodiment, the second arm 23 is movable between a retracted position, in which one end 23a of the second arm 23 is at a shortest distance from the transverse arm 25, and an extracted position, in which the end 23a is at a largest distance from the transverse arm 25. The movement of the second arm 23, more specifically of its end 23a, is parallel to the measuring plane M and takes place in a radial direction with respect to the rotation axis A of the turntable 12. In one embodiment, not shown, the first arm and the second arm are both movable in a radial direction and parallel to the measuring plane between respective retracted and extracted positions. In this way, it is possible to separately adjust the positions of the end 22a of the first arm 22 and the end 23a of the second arm 23 with respect to the axis A of the turntable 12. In one embodiment, the first arm 22 and the second arm 23 are also movable with respect to each other perpendicularly to the measuring plane M, so that it is possible to adjust the distance between them. For example, the transverse arm 25 could be movable between an extended position and a retracted position. Alternatively, at least one of the first arm 22 and the second arm 23 could slide along the transverse arm 25. Furthermore, in one embodiment, one of the first arm 22 and the second arm 23 may be dismounted. This, together with the possibility of adjusting the position of the arm perpendicularly to the measuring plane M, enables carrying out conformance checks even on rotor discs 2 of quite considerable thickness (for example, the disc also known as the central hollow shaft, which separates the compressor portion and the turbine portion of the rotor).

In one non-limitative embodiment, the first distance meter 15 and the second distance meter 16 comprise triangulation sensors, for example laser telemeters. The first distance meter 15 and the second distance meter 16 are connected to the supporting structure 13 at the end 22a of the first arm 22 and at the end 23a of the second arm 23, respectively. The first distance meter 15 and the second distance meter 16 are thus located on opposite sides of the measuring plane M, at a fixed distance from the latter. Both face towards the measuring plane M, so as to respectively detect the profiles of first face 2a and the second face 2b of the rotor disc 2 mounted on the turntable 12 and rotated in a controlled manner by the actuator 19.

Adjustments to the supporting structure 13 allow setting a first working distance D1 of the first distance meter 22 and a second working distance D2 of the second distance meter 23 with respect to axis A, as well as a third working distance D3 between the first distance meter 22 and the second distance meter 23. In particular, the first working distance D1 and the second working distance D2 may be set so that the first distance meter 15 faces the first Hirth toothing 11a and the second distance meter 16 faces the second Hirth toothing 11b (the first Hirth toothing 11a and the second Hirth toothing 11b, which are respectively on the first face 2a and on the second face 2b of the rotor disc 2, normally have different diameters; the possibility of adjusting the relative position of the first distance meter 15 and the second distance meter 16 allows compensating for this difference also based on the size of the rotor disc 2 under examination). When the turntable 12 turns about axis A under the action of the actuator 19, the first distance meter 15 and the second distance meter 16 respectively detect the height contours of the first Hirth toothing 11a and the second Hirth toothing 11b of the rotor disc 2 under examination. Adjustment of the third working distance D3 allows taking measurements on rotor discs 2 of different sizes.

The radial runout sensor 17 may comprise, for example, a further triangulation distance meter or an inductive displacement transducer. In one embodiment, the radial runout sensor 17 is placed at the end of a bar 28 connected to the supporting structure 13 and works parallel to the measuring plane M. More precisely, the bar 28 is connected to the transverse arm 25 of the supporting structure 13 by a fastening device 29 that allows height adjustment of the bar 28. In other words, the fastening device 29 may be alternatively released, to allow the bar 28 to slide along the transverse arm 25, and clamped to lock the bar 28 in a measurement position determined by the characteristics of the lateral surface of the rotor disc 2 mounted on the turntable 12. The bar 28 is also arranged radially with respect to the axis A of the turntable 12 and is movable in the same direction. In practice, the bar 28 may be extended and retracted to couple the radial runout sensor 17 to the lateral surface of the rotor disc 2.

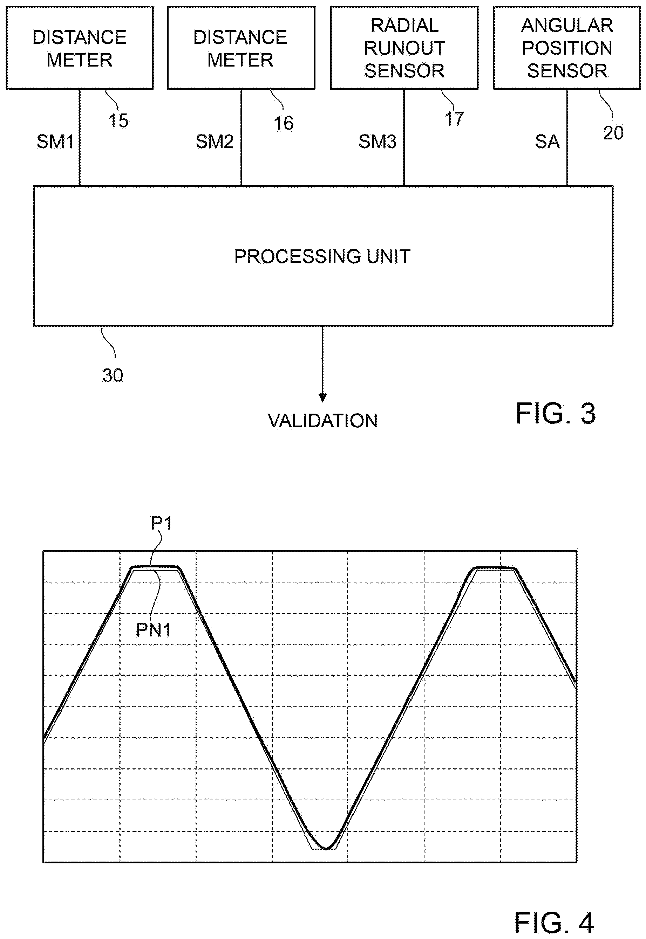

With reference to Figure 3, the apparatus 10 comprises a processing unit 30 configured to determine profiles of the faces of the rotor disc 2 positioned on the turntable 12. In detail, the processing unit 30 is connected to the first distance meter 15 to receive a first measurement signal SM1, to the second distance meter 16 to receive a second measurement signal SM2, to the radial runout sensor 17 to receive a third measurement signal and to the angular position sensor 20 to receive an angular position signal SA. Due to the way the first distance meter 15 and the second distance meter 16 are positioned, the first measurement signal SM1 and the second measurement signal SM1 are representative of the profile of the first Hirth toothing 11a and the profile second Hirth toothing 11b, respectively. Instead, the third measurement signal SM3 supplied by the radial runout sensor 17 is representative of symmetry defects of the rotor disc 2 with respect to the axis (the axis of the rotor disc 2 nominally coincides with the axis A of the turntable 12; in the event the rotor disc 2 is symmetrical but not perfectly aligned with the rotation axis A of the turntable 2, the processing unit can derive a parameter indicative of the eccentricity of positioning from the third measurement signal SM3, which will be sinusoidal).

The sensors 15, 16 and 17 are nominally placed on the same radial plane, passing through the rotation axis A, and the measurement signals SM1, SM2 and SM3 are synchronized by the processing unit 30 with respect to the angular position signal SA supplied by the angular position sensor 20, so as to establish an unambiguous correlation between measurements and respective angular positions of the rotor disc 2. The measurement signals SM1, SM2 and SM3 may be acquired during a plurality of complete rotations of the rotor disc 2 about the axis A of the turntable 12.

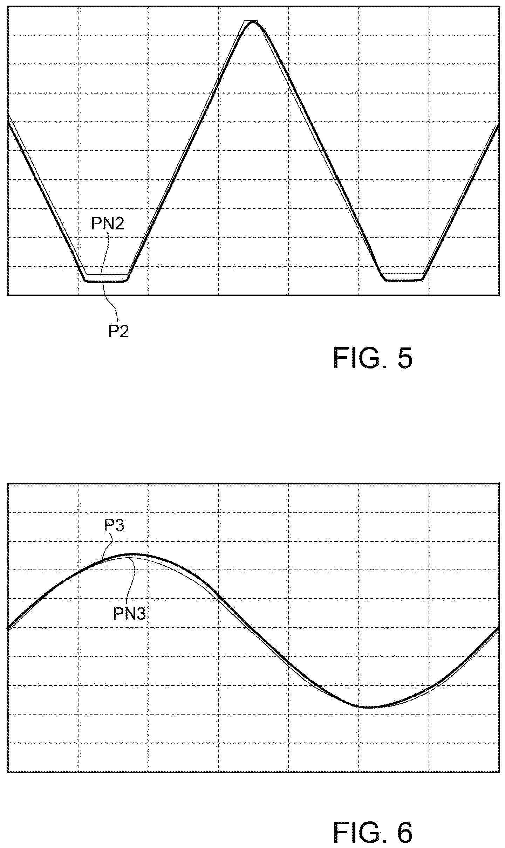

The processing unit 30 is configured to determine: a first profile P1 (see Figure 4) of the first Hirth toothing 11a from the first measurement signal SM1 and the angular position signal SA; a second profile P2 (Figure 5) of the second Hirth toothing 11b from the second measurement signal SM2 and the angular position signal SA; and a radial symmetry profile P3 (Figure 6) from the third measurement signal SM3 and the angular position signal SA.

The profiles P1, P2 and P3 may be determined, for example, by averages and/or interpolations of the relevant data from the first distance meter 15, the second distance meter 16 and the radial runout sensor 17.

The processing unit 30 is also configured to carry out a procedure for validating the rotor disc 2.

With reference to Figure 7, the processing unit 30 initially detects the positioning errors of the rotor disc 2 with respect to the rotation axis A of the turntable 12 (block 100). If the positioning error is excessive (block 110, YES exit), the processing unit 30 requests the operator to reposition the rotor disc 2 (block 120). Otherwise (block 110, NO exit), the processing unit 30 stores the detected parameters indicative of the positioning error of the rotor disc 2 (block 130).

The processing unit 30 (block 140) determines a first nominal profile PN1 (Figure 4), a second nominal profile PN1 (Figure 5) and a third nominal profile PN3 (Figure 6), considering:
- nominal geometric parameters of the rotor disc 2 (nominal diameter, number of teeth, inclination of teeth walls, width of the lands, etc.);
- corrective positioning parameters of the first distance meter 15, the second distance meter 16 and the radial runout sensor 17 with respect to a same radial plane passing through the rotation axis A and which requires parallelism of the first distance meter 15, the second distance meter 16 and the rotation axis A;
- corrective positioning parameters of the axis of the disc.

These parameters are characteristics of the relative positioning between rotor disc and sensors and enable unambiguously determining the nominal profiles PN1, PN2 and PN3 for each measurement session, starting from corresponding theoretical profiles. The nominal profiles PN1, PN2 and PN3 can be stored and considered as reference profiles for the measurement session.

The processing unit detects the first profile P1, the second profile P2 and the third profile P3 (block 150) and compares them with the first nominal profile PN1 (Figure 4), the second nominal profile PN2 (Figure 5) and the third nominal profile PN3 (Figure 6), respectively, to determine respective profile errors E1, E2 and E3 (block 160). The processing unit 30 compares the profile errors E1, E2 and E3 with respective thresholds (block 170), and then generates an affirmative validation message (block 170, YES exit; block 180) if the profile errors E1, E2 and E3 are less than the respective thresholds, or a validation failure message (block 170, NO exit; block 190) if one of the profile errors E1, E2 or E3 is greater than its respective threshold. The profile errors E1, E2 and E3 may be determined with respect to the reference nominal profiles using several metrics. For example, the error could be point deviation from the nominal reference profile, the mean deviation, the integral of the point deviation, the integral of absolute point deviation, or the deviation (mean, maximum or integral) between nominal geometric parameters that describe the Hirth toothing (teeth inclination and top land width) and geometric parameters obtained from the measurements taken.

The processing unit 30 may repeat the procedure for validating the Hirth toothings 11a and 11b by carrying out further measurement sessions with the sensors positioned at different distances from the rotation axis A of the turntable 2 (and therefore at different radii of the rotor disc 2). In this case, the processing unit 30 may determine and check the conformance of additional parameters, such as the generatrix of the Hirth toothing (its virtual centre) and the land taper of the teeth.

The described apparatus enables advantageously carrying out conformance checks on rotor discs of gas turbines in an accurate and repeatable manner, substantially eliminating the uncertainties due to subjective evaluations or manual operations by operators. It is therefore possible to take more effective action to correct imperfections and defects of the rotor discs, ensuring more accurate frontal couplings and, in general, better balancing of the rotor.

Finally, it is clear that modifications and variants can be made to the apparatus described herein without departing from the scope of the present invention, as defined in the appended claims.

## Claims

1. An apparatus for testing conformance of rotor discs of gas turbines, comprising:
a turntable (12), rotatable about an axis (A) and configured to support a rotor disc (2) of a gas turbine in a measuring plane (M);
an actuator (20), operable to rotate the turntable (12) about the axis (A);
supporting structure (13), supporting a first distance meter (15) and a second distance meter (16) on opposite sides with respect to the measuring plane (M), the distance meters both facing towards the measuring plane (M), **characterised by** the supporting structure (13) being adjustable to separately set a first working distance (D1) of the first distance meter (15) and a second working distance (D2) of the second distance meter (16) with respect to the axis (A).

2. The apparatus according to claim 1, wherein the supporting structure (13) comprises a first arm (22) and a second arm (23), movable parallel to the measuring plane (M), the first distance meter (15) and the second distance meter (16) being supported by the first arm (22) and by the second arm (23), respectively.

3. The apparatus according to claim 2, wherein the first arm (22) and the second arm (23) are arranged radially with respect to the axis (A) and are movable radially with respect to the axis (A).

4. The apparatus according to claim 2 or 3, wherein the first arm (22) and the second arm (23) are movable with respect to one another radially to the axis (A).

5. The apparatus according to any of claims 2 to 4, wherein the supporting structure (13) comprises a transverse arm (25), forming a fork with the first arm (22) and the second arm (23), and at least one of the first arm (22) and the second arm (23) is movable with respect to the transverse arm (25) between an extracted position and a retracted position.

6. The apparatus according to claim 5, wherein the transverse arm (25) is supported by a frame (21) and is movable radially with respect to the axis (A).

7. The apparatus according to any one of claims 2 to 6, wherein the first arm (22) and the second arm (23) are relatively movable perpendicularly to the measuring plane (M).

8. The apparatus according to any one of the foregoing claims, wherein the first distance meter (15) and the second distance meter (16) are configured to detect respective height contours of a rotor disc (2) arranged on the turntable (12) during rotation of the turntable (12) about the axis (A).

9. The apparatus according to any one of the foregoing claims, comprising a radial runout sensor (17) connected to the supporting structure (13) and arranged to operate parallel al measuring plane (M), wherein the radial runout sensor (17) is supported by a bar (28) connected to the supporting structure (13) and movable perpendicularly to the measuring plane (M) and radially with respect to the axis (A).

10. The apparatus according to any one of the foregoing claims, comprising an angular position sensor (20), configured to detect an angular position of the turntable (12), and a processing unit (30) coupled to the first distance meter (15) for receiving a first measurement signal (SM1), to the second distance meter (16) for receiving a second measurement signal (SM2) and to the angular position sensor (20) for receiving an angular position signal (SA); the processing unit (30) being configured to determine a first profile (P1), relating to a first face (2a) of a rotor disc (2) supported by the turntable (12), from the first measurement signal (SM1) and the angular position signal (SA), and a second profile (P2), relating to a second face (2b) of the rotor disc (2) supported by turntable (12), from the second measurement signal (SM2) and the angular position signal (SA).

11. The apparatus according to claim 10, wherein the processing unit (30) is configured to carry out a procedure for validating the rotor disc (2) supported by the turntable (12) on the basis of the first profile (P1), the second profile (P2) and respective reference profiles (PN1, PN2).

12. The apparatus according to claim 11, wherein the processing unit (30) is configured to detect parameters relating to positioning errors of the rotor disc (2) with respect to the turntable (12) and to determine the reference profiles (PN1, PN2) from theoretical profiles and from the parameters relating to positioning errors.

13. The apparatus according to claim 11 or 12, wherein the processing unit (30) is configured to determine profile errors (E1, E2) from the first profile (P1), the second profile (P2) and the respective reference profiles (PN1, PN2), and to compare the profile errors (E1, E2) with respective thresholds.

14. The apparatus according to any one of claims 11 to 13, as appended to claim 9, wherein the processing unit (30) is coupled to the radial runout sensor (17) for receiving a third measurement signal (SM3) and is configured to determine a third profile (P3), relating to a lateral surface of the del rotor disc (2) supported by the turntable (12), from the third measurement signal (SM3) and the angular position signal (SA).

15. The apparatus according to claim 14, wherein the processing unit (30) is configured to carry out the procedure for validating the rotor disc (2) supported by the turntable (12) based on the third profile (P3) and on a further reference profile (PN3).

## Patentansprüche

1. Vorrichtung zum Prüfen der Konformität von Rotorscheiben von Gasturbinen, umfassend:
einen Drehtisch (12), der um eine Achse (A) drehbar ist und dazu konfiguriert ist, eine Rotorscheibe (2) einer Gasturbine in einer Messebene (M) zu tragen;
einen Aktor (20), der so betreibbar ist, dass er den Drehtisch (12) um die Achse (A) dreht;
eine Tragstruktur (13), die einen ersten Abstandsmesser (15) und einen zweiten Abstandsmesser (16) auf gegenüberliegenden Seiten in Bezug auf die Messebene (M) trägt, wobei beide Abstandsmesser der Messebene (M) zugewandt sind, **dadurch gekennzeichnet, dass** die Tragstruktur (13) einstellbar ist, um einen ersten Arbeitsabstand (D1) des ersten Abstandsmessers (15) und einen zweiten Arbeitsabstand (D2) des zweiten Abstandsmessers (16) in Bezug auf die Achse (A) getrennt einzustellen.

2. Vorrichtung nach Anspruch 1, wobei die Tragstruktur (13) einen ersten Arm (22) und einen zweiten Arm (23) umfasst, die parallel zu der Messebene (M) beweglich sind, wobei der erste Abstandsmesser (15) und der zweite Abstandsmesser (16) von dem ersten Arm (22) bzw. von dem zweiten Arm (23) getragen werden.

3. Vorrichtung nach Anspruch 2, wobei der erste Arm (22) und der zweite Arm (23) radial zu der Achse (A) angeordnet und radial zu der Achse (A) beweglich sind.

4. Vorrichtung nach Anspruch 2 oder 3, wobei der erste Arm (22) und der zweite Arm (23) radial zu der Achse (A) gegeneinander beweglich sind.

5. Vorrichtung nach einem der Ansprüche 2 bis 4, wobei die Tragstruktur (13) einen Querarm (25) umfasst, der mit dem ersten Arm (22) und dem zweiten Arm (23) eine Gabel bildet, und wenigstens der erste Arm (22) und/oder der zweite Arm (23) bezüglich des Querarms (25) zwischen einer ausgefahrenen Position und einer eingefahrenen Position beweglich ist.

6. Vorrichtung nach Anspruch 5, wobei der Querarm (25) von einem Rahmen (21) getragen wird und radial zu der Achse (A) beweglich ist.

7. Vorrichtung nach einem der Ansprüche 2 bis 6, wobei der erste Arm (22) und der zweite Arm (23) senkrecht zu der Messebene (M) relativ beweglich sind.

8. Vorrichtung nach einem der vorangehenden Ansprüche, wobei der erste Abstandsmesser (15) und der zweite Abstandsmesser (16) dazu konfiguriert sind, die jeweiligen Höhenkonturen einer auf dem Drehtisch (12) angeordneten Rotorscheibe (2) während der Drehung des Drehtischs (12) um die Achse (A) zu erfassen.

9. Vorrichtung nach einem der vorangehenden Ansprüche, einen mit der Tragstruktur (13) verbundenen, parallel zu der Messebene (M) arbeitenden Radialschlag-Sensor (17) umfassend, wobei der Radialschlag-Sensor (17) von einer Stange (28) getragen wird, die mit der Tragstruktur (13) verbundenen ist und senkrecht zu der Messebene (M) und radial zu der Achse (A) beweglich ist.

10. Vorrichtung nach einem der vorangehenden Ansprüche, umfassend einen Winkelpositionssensor (20), der dazu konfiguriert ist, eine Winkelposition des Drehtischs (12) zu erfassen, und eine Verarbeitungseinheit (30), die mit dem ersten Abstandsmesser (15) zum Empfangen eines ersten Messsignals (SM1), mit dem zweiten Entfernungsmesser (16) zum Empfangen eines zweiten Messsignals (SM2) und mit dem Winkelpositionssensor (20) zum Empfangen eines Winkelpositionssignals (SA) gekoppelt ist; wobei die Verarbeitungseinheit (30) dazu konfiguriert ist, aus dem ersten Messsignal (SM1) und dem Winkelpositionssignal (SA) ein erstes Profil (P1), das sich auf eine erste Fläche (2a) einer von dem Drehtisch (12) getragenen Rotorscheibe (2) bezieht, und aus dem zweiten Messsignal (SM2) und dem Winkelpositionssignal (SA) ein zweites Profil (P2), das sich auf eine zweite Fläche (2b) der von dem Drehtisch (12) getragenen Rotorscheibe (2) bezieht, zu bestimmen.

11. Vorrichtung nach Anspruch 10, wobei die Verarbeitungseinheit (30) dazu konfiguriert ist, eine Prozedur durchzuführen zum Validieren der von dem Drehtisch (12) getragenen Rotorscheibe (2) basierend auf dem ersten Profil (P1), dem zweiten Profil (P2) und entsprechender Referenzprofile (PN1, PN2).

12. Vorrichtung nach Anspruch 11, wobei die Verarbeitungseinheit (30) dazu konfiguriert ist, Parameter zu erfassen, die sich auf Positionierungsfehler der Rotorscheibe (2) in Bezug auf den Drehtisch (12) beziehen, und die Referenzprofile (PN1, PN2) aus theoretischen Profilen und aus den Parametern, die sich auf Positionierungsfehler beziehen, zu bestimmen.

13. Vorrichtung nach Anspruch 11 oder 12, wobei die Verarbeitungseinheit (30) dazu konfiguriert ist, Profilfehler (E1, E2) aus dem ersten Profil (P1), dem zweiten Profil (P2) und den jeweiligen Referenzprofilen (PN1, PN2) zu bestimmen und die Profilfehler (E1, E2) mit jeweiligen Schwellenwerten zu vergleichen.

14. Vorrichtung nach einem der Ansprüche 11 bis 13, wenn abhängig von Anspruch 9, wobei die Verarbeitungseinheit (30) mit dem Radialschlag-Sensor (17) gekoppelt ist, um ein drittes Messsignal (SM3) zu empfangen, und dazu konfiguriert ist, aus dem dritten Messsignal (SM3) und dem Winkelpositionssignal (SA) ein drittes Profil (P3) zu bestimmen, das sich auf eine Seitenfläche der vom Drehtisch (12) getragenen Rotorscheibe (2) bezieht.

15. Vorrichtung nach Anspruch 14, wobei die Verarbeitungseinheit (30) dazu konfiguriert ist, die Prozedur zum Validieren der von dem Drehtisch (12) getragenen Rotorscheibe (2) basierend auf dem dritten Profil (P3) und einem weiteren Referenzprofil (PN3) durchzuführen.

## Revendications

1. Appareil destiné à tester la conformité de disques de rotor de turbines à gaz, comprenant :
une plaque tournante (12), pouvant tourner autour d'un axe (A) et configurée pour supporter un disque de rotor (2) d'une turbine à gaz dans un plan de mesure (M) ;
un actionneur (20), actionnable pour faire tourner la plaque tournante (12) autour de l'axe (A) ;
une structure de support (13), supportant un premier dispositif de mesure de distance (15) et un deuxième dispositif de mesure de distance (16) situés de part et d'autre du plan de mesure (M), les dispositifs de mesure de distance étant tous deux tournés vers le plan de mesure (M), **caractérisé en ce que** la structure de support (13) est réglable pour définir séparément une première distance de travail (D1) du premier dispositif de mesure de distance (15) et une deuxième distance de travail (D2) du deuxième dispositif de mesure de distance (16) par rapport à l'axe (A).

2. Appareil selon la revendication 1, dans lequel la structure de support (13) comprend un premier bras (22) et un deuxième bras (23), mobiles parallèlement au plan de mesure (M), le premier dispositif de mesure de distance (15) et le deuxième dispositif de mesure de distance (16) étant supportés par le premier bras (22) et par le deuxième bras (23), respectivement.

3. Appareil selon la revendication 2, dans lequel le premier bras (22) et le deuxième bras (23) sont disposés radialement par rapport à l'axe (A) et sont mobiles radialement par rapport à l'axe (A).

4. Appareil selon la revendication 2 ou 3, dans lequel le premier bras (22) et le deuxième bras (23) sont mobiles l'un par rapport à l'autre radialement par rapport à l'axe (A).

5. Appareil selon l'une quelconque des revendications 2 à 4, dans lequel la structure de support (13) comprend un bras transversal (25), formant une fourche avec le premier bras (22) et le deuxième bras (23), et au moins le premier bras (22) et/ou le deuxième bras (23) est mobile par rapport au bras transversal (25) entre une position extraite et une position rétractée.

6. Appareil selon la revendication 5, dans lequel le bras transversal (25) est supporté par un cadre (21) et est mobile radialement par rapport à l'axe (A).

7. Appareil selon l'une quelconque des revendications 2 à 6, dans lequel le premier bras (22) et le deuxième bras (23) sont mobiles l'un par rapport à l'autre perpendiculairement au plan de mesure (M).

8. Appareil selon l'une quelconque des revendications précédentes, dans lequel le premier dispositif de mesure de distance (15) et le deuxième dispositif de mesure de distance (16) sont configurés pour détecter des contours de hauteur respectifs d'un disque de rotor (2) disposé sur la plaque tournante (12) pendant la rotation de la plaque tournante (12) autour de l'axe (A).

9. Appareil selon l''une quelconque des revendications précédentes, comprenant un capteur d'excentricité (17) relié à la structure de support (13) et agencé pour fonctionner parallèlement au plan de mesure (M), dans lequel le capteur d'excentricité (17) est supporté par une barre (28) reliée à la structure de support (13) et mobile perpendiculairement au plan de mesure (M) et radialement par rapport à l'axe (A).

10. Appareil selon l'une quelconque des revendications précédentes, comprenant un capteur de position angulaire (20), configuré pour détecter une position angulaire de la plaque tournante (12), et une unité de traitement (30) couplée au premier dispositif de mesure de distance (15) pour recevoir un premier signal de mesure (SM1), au deuxième dispositif de mesure de distance (16) pour recevoir un deuxième signal de mesure (SM2) et au capteur de position angulaire (20) pour recevoir un signal de position angulaire (SA) ; l'unité de traitement (30) étant configurée pour déterminer un premier profil (P1), relatif à une première face (2a) d'un disque de rotor (2) supporté par la plaque tournante (12), à partir du premier signal de mesure (SM1) et du signal de position angulaire (SA), et un deuxième profil (P2), relatif à une deuxième face (2b) du disque de rotor (2) supporté par la plaque tournante (12), à partir du deuxième signal de mesure (SM2) et du signal de position angulaire (SA).

11. Appareil selon la revendication 10, dans lequel l'unité de traitement (30) est configurée pour exécuter une procédure de validation du disque de rotor (2) supporté par la plaque tournante (12) sur la base du premier profil (P1), du deuxième profil (P2) et de profils de référence respectifs (PN1, PN2).

12. Appareil selon la revendication 11, dans lequel l'unité de traitement (30) est configurée pour détecter des paramètres relatifs à des erreurs de positionnement du disque de rotor (2) par rapport à la plaque tournante (12) et pour déterminer les profils de référence (PN1, PN2) à partir de profils théoriques et des paramètres relatifs à des erreurs de positionnement.

13. Appareil selon la revendication 11 ou 12, dans lequel l'unité de traitement (30) est configurée pour déterminer des erreurs de profil (E1, E2) à partir du premier profil (P1), du deuxième profil (P2) et des profils de référence respectifs (PN1, PN2), et pour comparer les erreurs de profil (E1, E2) à des seuils respectifs.

14. Appareil selon l'une quelconque des revendications 11 à 13, annexé à la revendication 9, dans lequel l'unité de traitement (30) est couplée au capteur d'excentricité (17) pour recevoir un troisième signal de mesure (SM3) et est configurée pour déterminer un troisième profil (P3), relatif à une surface latérale du disque de rotor (2) supporté par la plaque tournante (12), à partir du troisième signal de mesure (SM3) et du signal de position angulaire (SA).

15. Appareil selon la revendication 14, dans lequel l'unité de traitement (30) est configurée pour exécuter la procédure de validation du disque de rotor (2) supporté par la plaque tournante (12) sur la base du troisième profil (P3) et d'un autre profil de référence (PN3).
